# EUROPÄISCHE PATENTANMELDUNG

(11) **EP 4 756 480 A1**
(43) Veröffentlichungstag der Anmeldung: **10.06.2026**
(21) Anmeldenummer: 24217122.1
(22) Anmeldetag: 03.12.2024
(51) Int. Cl.: G01S 7/00, G01S 7/40, G01S 7/497, G01S 13/931, G01S 17/931

(54) **VERFAHREN UND EINRICHTUNG ZUR ONLINE-KALIBRIERUNG EINES UMFELDERFASSUNGSSYSTEMS IN EINEM KRAFTFAHRZEUG**

(71) Anmelder: Robert Bosch GmbH, 70442 Stuttgart (DE)
(72) Erfinder: Gugale, Rohan, 71636 Ludwigsburg (DE); Erdei, Bence, 2220 Vecses (HU)

(57) **Zusammenfassung**

Verfahren zur Online-Kalibrierung eines Umfelderfassungssystems (14) in einem Kraftfahrzeug (10), **gekennzeichnet** durch die folgenden Schritte:
a) während der Fahrt des Fahrzeugs (10) erfasst das Umfelderfassungssystem (14) fortlaufend Ortungsdaten von Objekten (30, 32) in seinem Umfeld und sendet diese Ortungsdaten zusammen mit Bewegungsdaten des Fahrzeugs (10) drahtlos an einen Kalibrierungsdienst (26);
b) der Kalibrierungsdienst (26) hat Zugang zu einer Straßensignatur (28) in der Form einer digitalen Karte, in der längs der von dem Fahrzeug befahrenen Straße (12) die Positionen von permanent stationären Signaturobjekten (30) verzeichnet sind, die von Umfelderfassungssystemen erfassbar sind, und filtert die vom Umfelderfassungssystem (14) gesendeten Ortungsdaten nach Signaturobjekten;
c) anhand der Ortungsdaten der Signaturobjekte (30) und anhand der Bewegungsdaten verfolgt der Kalibrierungsdienst (26) die Bewegung des Fahrzeugs (10) auf der digitalen Karte;
d) durch Abgleich der Ortungsdaten der Signaturobjekte (30) mit den Positionen der Signaturobjekte relativ zum Fahrzeug (10) in der digitalen Karte berechnet der Kalibrierungsdienst (26) Korrekturdaten, die, soweit vorhanden, Kalibrierungsfehler des Umfelderfassungssystems (14) angeben, und sendet diese an das Fahrzeug (10);
e) das Umfelderfassungssystem (14) nimmt anhand der Korrekturdaten eine Neukalibrierung vor.

## Beschreibung

Die Erfindung betrifft ein Verfahren zur Online-Kalibrierung eines Umfelderfassungssystems in einem Kraftfahrzeug sowie eine Einrichtung zur Durchführung dieses Verfahrens.

### Stand der Technik

In fortgeschrittenen Fahrerassistenzsystemen und autonomen Fahrsystemen bestehen hohe Anforderungen an die Genauigkeit und Verlässlichkeit des Umfelderfassungssystems des Fahrzeugs. Das Umfelderfassungssystem eines Kraftfahrzeugs wird durch eine zunehmend größere Anzahl von Sensoren wie Radarsensoren, Lidarsensoren und Videokameras gebildet, mit denen Objekte im Umfeld des Fahrzeugs geortet und klassifiziert werden. Bei winkelauflösenden Sensoren können leicht Justagefehler auftreten, die dazu führen, dass die optische Achse des Sensors nicht die korrekte räumliche Beziehung zur horizontalen Vorwärts-Richtung des Fahrzeugs hat und deshalb bei der Winkelmessung systematische Fehler auftreten. Es ist deshalb erforderlich, diese Sensoren vor der Inbetriebnahme zu kalibrieren, damit solche Justagefehler erkannt und rechnerisch korrigiert werden können. Bei winkelauflösenden Radarsensoren ist auch eine genaue Kalibrierung der Antennendiagramme erforderlich, die angeben, welcher Zusammenhang zwischen den Amplituden und Phasen der in mehreren Empfangskanälen empfangenen Radarechos und dem Richtungswinkel des georteten Objekts besteht.

Bei den bekannten Kalibrierverfahren unterscheidet man zwischen Offline-Verfahren und Online-Verfahren. Bei einem Offline-Verfahren durchläuft das Fahrzeug am Ende der Fertigungslinie eine Kalibrierstation, in der standardisierte Reflektoren so aufgestellt sind, dass die räumlichen Beziehungen zwischen den Reflektoren und den Sensoren im Fahrzeug genau bekannt sind, so dass die mit den Sensoren erhaltenen Messdaten mit bekannten Referenzwerten verglichen werden können. Da die Kalibrierungen bei relativ großen Reflektorabständen vorgenommen werden müssen und sich oft über einen großen Winkelbereich des Sensors erstrecken müssen, wird für die Kalibrierstationen viel Platz beansprucht, und die Messungen erfordern einen erheblichen Zeit- und Arbeitsaufwand. In Kraftfahrzeugwerken mit hoher Produktionsrate müssen mehrere Kalibrierstationen eingerichtet werden, damit die nötigen Prozeduren parallel für mehrere Fahrzeuge vorgenommen werden können. Daraus ergeben sich ein erheblicher Platzbedarf und hohe Installationskosten.

Nach Inbetriebnahme der Fahrzeuge können schon kleinere Parkrempler dazu führen, dass Sensoren dejustiert werden und eine erneute Kalibrierung erforderlich ist. In den meisten Werkstätten stehen jedoch keine Räumlichkeiten für die Einrichtung einer sperrigen Kalibrierstation zur Verfügung.

Bei Online-Kalibrierverfahren wird die Kalibrierung während der Fahrt vorgenommen, indem die Messergebnisse verschiedener Sensoren miteinander abgeglichen und verrechnet werden. Auf diese Weise lassen sich - zumindest unter günstigen Bedingungen - Kalibrierfehler erkennen und beheben. Allerdings ist die Genauigkeit der Kalibrierung stark von den örtlichen Gegebenheiten abhängig, unter denen die Kalibrierung stattfindet. Beispielsweise ist die Online-Kalibrierung in Umgebungen, in denen sich zahlreiche Metallobjekte wie Leitplanken oder dergleichen befinden, erheblich erschwert, so dass eine ausreichende Genauigkeit nicht immer garantiert werden kann.

Aufgabe der Erfindung ist als ein präzises Kalibrierverfahren angegeben, das zu geringen Kosten und in kurzer Zeit durchgeführt werden kann und keine platzbeanspruchenden Kalibrierstationen erfordert.

Diese Aufgabe wird erfindungsgemäß durch ein Verfahren gelöst, das die folgenden Schritte aufweist:
a) während der Fahrt des Fahrzeugs erfasst das Umfelderfassungssystem fortlaufend Ortungsdaten von Objekten in seinem Umfeld und sendet diese Ortungsdaten zusammen mit Bewegungsdaten des Fahrzeugs drahtlos an einen Kalibrierungsdienst;
b) der Kalibrierungsdienst hat Zugang zu einer Straßensignatur in der Form einer digitalen Karte, in der längs der von dem Fahrzeug befahrenen Straße die Positionen von permanent stationären Signaturobjekten verzeichnet sind, die von Umfelderfassungssystemen erfassbar sind, und filtert die vom Umfelderfassungssystem gesendeten Ortungsdaten nach Signaturobjekten;
c) anhand der Ortungsdaten der Signaturobjekte und anhand der Bewegungsdaten verfolgt der Kalibrierungsdienst die Bewegung des Fahrzeugs auf der digitalen Karte;
d) durch Abgleich der Ortungsdaten der Signaturobjekte mit den Positionen der Signaturobjekte relativ zum Fahrzeug in der digitalen Karte berechnet der Kalibrierungsdienst Korrekturdaten, die, soweit vorhanden, Kalibrierungsfehler des Umfelderfassungssystems angeben, und sendet diese an das Fahrzeug;
e) das Umfelderfassungssystem nimmt anhand der Korrekturdaten eine Neukalibrierung vor.

Die Anmelderin stellt unter der Bezeichnung "Bosch Straßensignatur" einen Onlinedienst zur Verfügung, der eine zuverlässige und robuste Lokalisierung der Fahrzeuge für spurgenaue Navigation und automatisiertes Fahren bereitstellt. Zu diesem Zweck sind in einer ständig aktualisierten digitalen Karte des von den Fahrzeugen befahrenen Arreals die Positionen bestimmter Objekte wie Ampelmasten, Verkehrsschilder und dergleichen verzeichnet, die sich als Referenzpunkte für die Lokalisierung von Fahrzeugen mit Hilfe der fahrzeugeigenen Sensorik eignen und hier als "Signaturobjekte" bezeichnet werden. Grundidee der Erfindung ist es, diesen Onlinedienst für eine genaue Kalibrierung der Umfelderfassungssysteme von Fahrzeugen während der Fahrt zu nutzen. Auf diese Weise lässt sich die Störung der Kalibrierprozesse durch eine zu große Anzahl von reflektierenden Objekten wie Leitplanken oder dergleichen vermeiden, die sich nicht als Referenzobjekte für die Kalibrierung eignen, und durch die Möglichkeit, die Fahrzeuge präzise zu lokalisieren, wird die Genauigkeit der Kalibrierprozesse verbessert.

Wenn das Umfelderfassungssystem eines Fahrzeugs kalibriert werden soll, so sendet dieses Umfelderfassungssystem aktuelle Ortungsdaten über einen gewissen Zeitraum hinweg fortlaufend an den Kalibrierungsdienst, der Zugang zu der Straßensignatur hat oder diese selbst unterhält. In einer Filterprozedur werden dann die Ortungsdaten von Objekten ausgeblendet, die keine Signaturobjekte sind. Auf diese Weise wird die Anzahl der auszuwertenden Ortungsdaten auf eine überschaubare Größe reduziert und es werden nur Objekte berücksichtigt, deren Positionen genau bekannt sind und die sich deshalb als Referenzobjekte eignen. Beispielsweise können in einem ersten Schritt bewegliche Objekte wie Fußgänger, fahrende Kraftfahrzeuge und dergleichen ausgefiltert werden, die sich nicht als Referenzobjekte eignen. Dies kann gegebenenfalls schon im Umfelderfassungssystem selbst erfolgen, so dass die Daten gar nicht erst an den Kalibrierungsdienst gesendet zu werden brauchen. Es bleiben dann die stationären Objekte, die keine Signaturobjekte sind, beispielsweise ausgedehnte Objekte, die sich nicht als Positionsreferenz eignen, oder Objekte wie parkende Fahrzeuge, die nur temporär stationär sind. Die Signaturobjekte lassen sich durch Abgleich mit der Straßensignatur erkennen, sofern die aktuelle Position des Fahrzeugs wenigstens ungefähr bekannt ist, beispielsweise anhand von GPS-Daten. Umgekehrt lässt sich jedoch anhand von einmal erkannten Signaturobjekten das Fahrzeug präzise lokalisieren. Da der Kalibrierungsdienst auch die Bewegungsdaten des Fahrzeugs erhält, kann der Kalibrierungsdienst die Lokalisierung anhand dieser Bewegungsdaten, beispielsweise anhand der Fahrgeschwindigkeit und des Lenkradeinschlags, fortschreiben. Kalibrierungsfehler lassen sich dann dadurch erkennen und quantifizieren, dass Diskrepanzen zwischen den vom Umfelderfassungssystem gemessenen Ortungsdaten von Signaturobjekten und den wahren Positionen der Signaturobjekte relativ zur aktuellen Position des Fahrzeugs ergeben. Auf diese Weise kann schon auf einer relativ kurzen Fahrstrecke eine hinreichend genaue Kalibrierung sämtlicher Sensoren erreicht werden.

Vorteilhafte Ausgestaltungen und Weiterbildungen der Erfindung ergeben sich aus den Unteransprüchen.

Die vom Kalibrierungsdienst vorzunehmenden Filterprozeduren können beispielsweise den Einsatz von Matched-Filter-Algorithmen oder auch den Einsatz von künstlicher Intelligenz einschließen.

Die Straßensignatur braucht nicht das gesamte Streckennetz abzudecken. Es genügt, wenn die Straßensignatur für räumlich begrenzte Teile des Straßennetzes in der Nähe der Fahrzeughersteller und Werkstätten vorhanden ist.

Mit zunehmender Anzahl der Sensoren eines Umfelderfassungssystems steigt die Wahrscheinlichkeit, dass Kalibrierungsfehler bereits anhand von Diskrepanzen zwischen den Messresultaten verschiedener Sensoren zumindest erkannt werden können, auch wenn die Daten für eine korrekte Neukalibrierung nicht ausreichen. In solchen Fällen kann beispielsweise ein autonomes Fahrzeug automatisch die nächstgelegene Region anfahren, für die eine Straßensignatur vorliegt, und dann beim Durchfahren dieser Region die Neukalibrierung vornehmen.

Andererseits kann in Zeiten, in denen ein Fahrzeug ein Gebiet durchfährt, für das eine Straßensignatur vorhanden ist, das hier vorgeschlagene Verfahren noch dazu benutzt werden, die Kalibrierung des Umfelderfassungssystems vorbeugend zu überprüfen.

Eine "Straßensignatur" kann nicht nur für öffentliche Verkehrswege erstellt werden, sondern beispielsweise auf für Fertigungsstraßen im Betrieb des KFZ-Herstellers oder für Prüfstrecken in Werkstätten. In dem Fall kann die Kalibrierung bereits während des Fertigungs- oder Prüfprozesses erfolgen.

Im Folgenden wird ein Ausführungsbeispiel anhand der Zeichnung näher erläutert. Es zeigen:
- Fig. 1: ein Diagramm eines Kalibriersystems, das nach dem erfindungsgemäßen Verfahren arbeitet;
- Fig. 2: einen Ausschnitt einer digitalen Karte mit Straßensignatur in einer Situation, in der ein Fahrzeug lokalisiert wird;
- Fig. 3: den gleichen Kartenausschnitt wie Fig. 2, jedoch zu einem etwas späteren Zeitpunkt bei der Erkennung eines Justagefehlers;
- Fig. 4: einen Kartenausschnitt mit Straßensignatur zur Illustration eines Kalibriervorgangs für einen winkelauflösenden Radarsensor; und
- Fig. 5: ein Flussdiagramm für ein Verfahren gemäß der Erfindung.

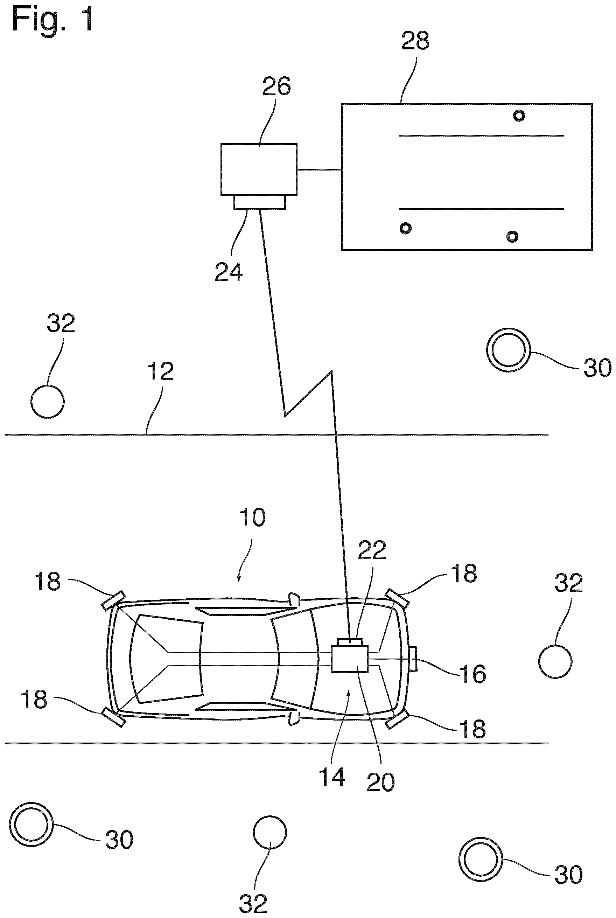

In Fig. 1 ist schematisch ein Fahrzeug 10 gezeigt, das auf einer Straße 12 fährt und ein Umfelderfassungssystem 14 aufweist. Das Umfelderfassungssystem 14 wird im gezeigten Beispiel gebildet durch einen in Fahrtrichtung nach vorn gerichteten langreichweitigen Radarsensor 16, vier kurzreichweitige Radarsensoren 18 an den Ecken des Fahrzeugs und ein elektronisches Steuergerät 20, das die Daten aller Radarsensoren auswertet.

Über eine Schnittstelle 22 ist das Steuergerät 20 drahtlos mit einer Kommunikationsschnittstelle 24 einer Datenverarbeitungseinrichtung verbunden, die einen Kalibrierungsdienst 26 zur Online-Kalibrierung des Umfelderfassungssystems 14 bereitstellt. Es versteht sich, dass dieser Kalibrierungsdienst auch anderen Fahrzeugen zur Verfügung steht.

Der Kalibrierungsdienst 26 hat Zugriff auf eine Straßensignatur 28. Dabei handelt es sich grob gesagt um einen Datenspeicher, in dem eine digitale Karte eines Streckennetzes gespeichert ist, zu dem auch die von dem Fahrzeug 10 befahrene Straße 12 gehört. In dieser digitalen Karte sind außer der Straße 12 auch die Positionen von Signaturobjekten 30 verzeichnet. Bei diesen Signaturobjekten 30 handelt es sich um stationäre Objekte, die sich dauernd am gleichen Ort befinden und deshalb als Referenzpunkte für die Lokalisierung des Fahrzeugs 10 geeignet sind. Beispiele für solche Signaturobjekte sind etwa Ampelmasten oder Verkehrsschilder.

Im Umfeld des Fahrzeugs 10 befinden sich außer den Signaturobjekten 30 auch andere Objekte 32, die nicht in der Straßensignatur 28 verzeichnet sind, weil sie entweder nicht stationär sind, wie fahrende Fahrzeuge, Fußgänger und dergleichen, oder zumindest nicht dauerhaft stationär sind, wie z.B. parkende Fahrzeuge. Auch ausgedehnte reflektierende Objekte wie Leitplanken und dergleichen sind nicht in der Straßensignatur 28 verzeichnet, weil sie sich nicht als Referenzpunkte für die Lokalisierung eignen. Die Ortungsdaten von Objekten 32, die stationär sind, werden ebenso wie die Ortungsdaten der Signaturobjekte 30 an den Kalibrierungsdienst 26 gesendet.

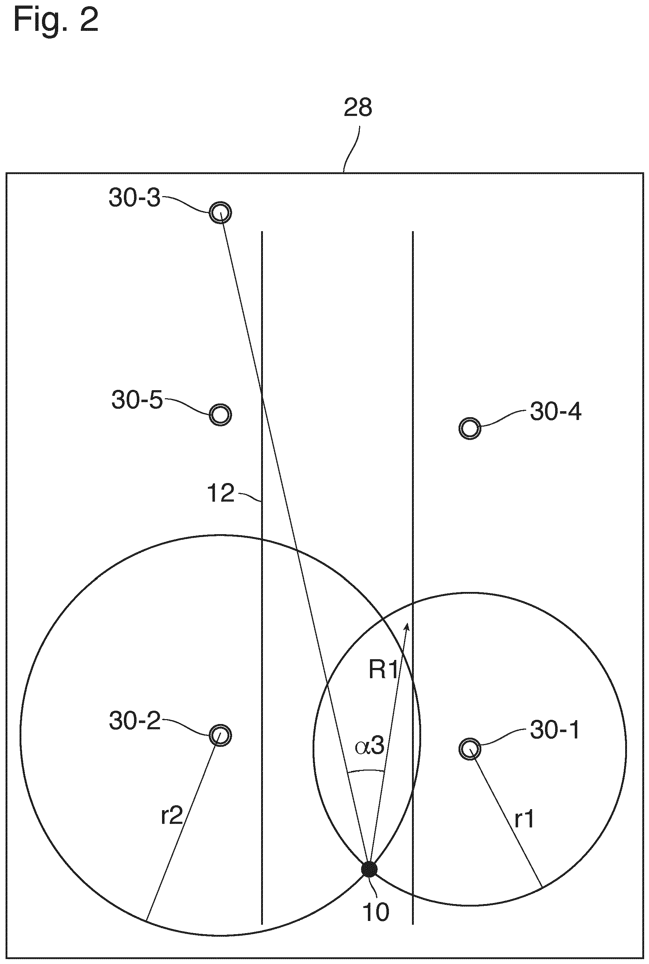

Fig. 2 zeigt einen etwas größeren Kartenausschnitt der Straßensignatur 28, in dem insgesamt fünf Signaturobjekte verzeichnet sind, die hier zur besseren Unterscheidung mit 30-1, 30-2,
30-3, 30-4, und 30-5 bezeichnet werden. Bei den Signaturobjekten 30-1 und 30-2 handelt es sich beispielsweise um Ampelmasten, die auf gleicher Höhe beiderseits der Straße 12 aufgestellt sind. Zu einem gegebenen Zeitpunkt ortet der Radarsensor 16 des Fahrzeugs 10 diese beiden Ampelmasten und misst deren Entfernungen r1 und r2. Diese beiden Radien sowie auch die Azimutwinkel der beiden Objekte sowie Ortungsdaten weiterer vom Umfelderfassungssystem 14 georteter Objekte werden an den Kalibrierungsdienst 26 gemeldet. Weiterhin meldet das Umfelderfassungssystem die ungefähre Position des Fahrzeugs 10, die etwa mit einem GPS-System bestimmt wurde. Diese ungefähre Position des Fahrzeugs auf der Straße 12 ermöglicht es den Kalibrierungsdienst, zwei der georteten Objekte als die Signaturobjekte 30-1 und 30-2 zu identifizieren und die Objekte 30, die kein Gegenstück in der Straßensignatur 28 haben, von den Signaturobjekten zu unterscheiden. Die exakte Position des Fahrzeugs 10, genauer, des Radarsensors 16, kann nun bestimmt werden, indem um das Signaturobjekt 30-1 ein Kreis mit dem Radius r1 und um das Signaturobjekt 30-2 ein Kreis mit dem Radius r2 geschlagen wird. Einer der beiden Schnittpunkte dieser Kreise (der in Fahrtrichtung vor den Ampelmasten gelegene) ist die exakte Position des Fahrzeugs 10. Im gleichen Augenblick ortet der Radarsensor 16 auch das weiter entfernte Signaturobjekt 30-3, beispielsweise ein Verkehrsschild. Der Radarsensor 16 misst für dieses Objekt den Azimutwinkel α3 und meldet ihn ebenfalls an den Kalibrierungsdienst. Das erlaubt es dem Kalibrierungsdienst, anhand der Straßensignatur 28 die momentane Fahrtrichtung R1 des Fahrzeugs 10 zu bestimmen. Die deutliche Abweichung dieser Fahrtrichtung von dem Verlauf der Straße 12 deutet darauf hin, dass der gemessene Winkel α3 fehlerhaft ist.

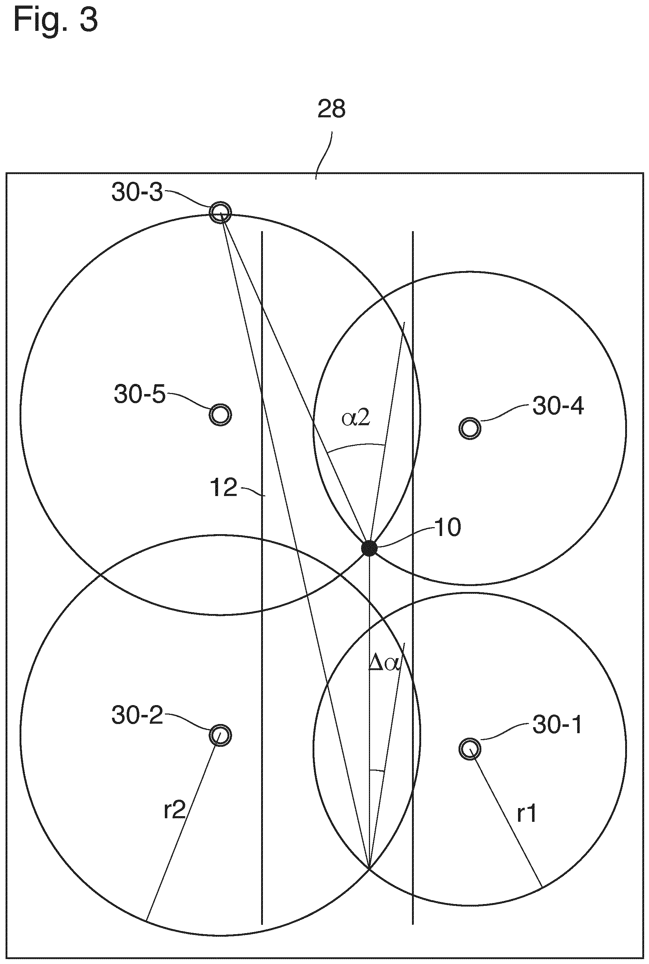

Fig. 3 illustriert die Situation zu einem etwas späteren Zeitpunkt, wenn sich das Fahrzeug 10 den beiden Signaturobjekten 30-4 und 30-5 (beispielsweise ebenfalls Ampelmasten) genähert hat. Die neue Position des Fahrzeugs wird nun auf die gleiche Weise wie zuvor mit Hilfe der Signaturobjekte 30-4 und 30-5 bestimmt. Das Ergebnis ist, dass die wahre Fahrtrichtung des Fahrzeugs exakt parallel zum Verlauf der Straße 12 war. Diese Information erlaubt es dem Kalibrierungsdienst 26, den Dejustagewinkel Δα des Radarsensors 16 zu bestimmen. Gleichzeitig meldet das Umfelderfassungssystem 14 den neuen (gleichfalls fehlerhaften) Azimutwinkel des Signaturobjekts 30-3. Der Kalibrierungsdienst 26 meldet jedoch den Dejustagewinkel Δα an das Umfelderfassungssystem 14 zurück, so dass dieses nun den wahren Winkel berechnen kann. Im Zuge einer Neukalibrierung speichert das Umfelderfassungssystem 14 den Dejustagewinkel Δα und korrigiert fortan alle vom Radarsensor 16 gemessenen Azimutwinkel um diesen Dejustagewinkel.

Neben den Ortungsdaten von Objekten meldet das Umfelderfassungssystem auch Bewegungsdaten des Fahrzeugs 10 an den Kalibrierungsdienst 26. Diese Bewegungsdaten umfassen insbesondere die Fahrgeschwindigkeit, den Lenkwinkel des Fahrzeugs und/oder die mit Trägheitssensoren gemessene Längs- und Querbbeschleunigung. Wenn die genaue Position des Fahrzeugs 10 in der digitalen Karte einmal bekannt ist, kann der Kalibrierungsdienst anhand der Bewegungsdaten die Trajektorie des Fahrzeugs weiterverfolgen, auch wenn keine Ortungsdaten von Signaturobjekten verfügbar sind. So kann sich der Kalibrierungsdienst in dem in Figuren 2 und 3 gezeigten Beispiel vergewissern, dass während der Bewegung des Fahrzeugs keine Lenkeingriffe stattgefunden haben. Generell ermöglichen die Bewegungsdaten ein Mikrolokalisierung des Fahrzeugs, während die Ortungsdaten der Signaturobjekte eine Makrolokalisierung ermöglichen. Ein Vergleich der Mikro- und Makrolokalisierungen ermöglicht dann eine Kontrolle der Kalibrierung.

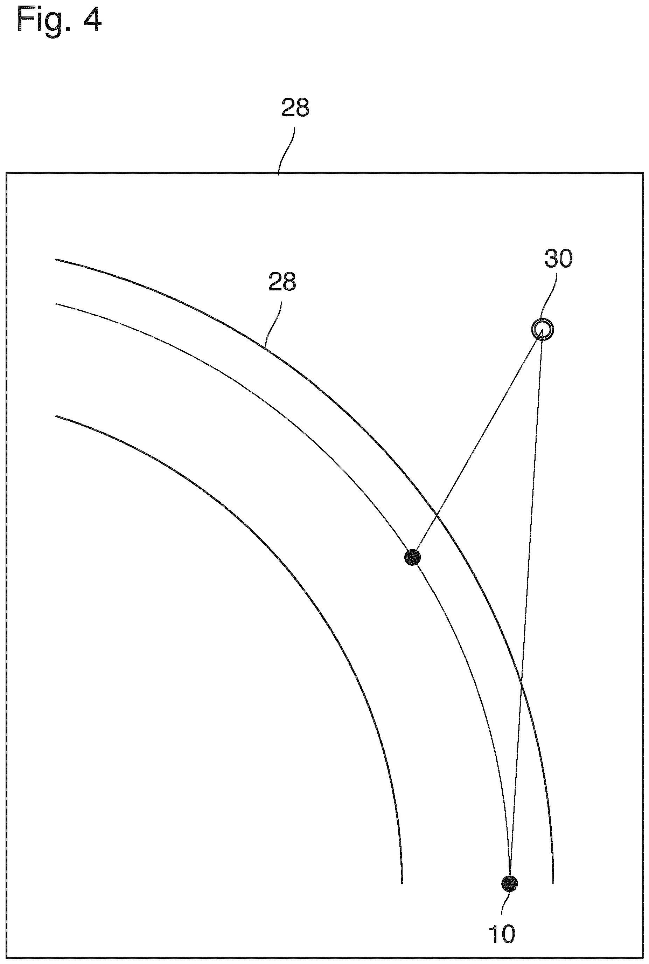

Fig. 4 zeigt einen anderen Kartenausschnitt der Straßensignatur 28, in dem die Straße 12 einen gekrümmten Verlauf hat. Wenn die genaue Position des Fahrzeugs 10 einmal bekannt ist, kann der Kalibrierungsdienst anhand der Fahrgeschwindigkeit und des Lenkeinschlags das Fahrzeug auch auf einer gekrümmten Trajektorie verfolgen. Während des gesamten Bewegungsablaufs ortet der Radarsensor 16 ein einzelnes Signaturobjekt 30 und meldet dessen (korrigierten) Azimutwinkel an den Kalibrierungsdienst. Anhand der bekannten Trajektorie des Fahrzeugs kann jedoch der Kalibrierungsdienst den Azimutwinkel auch unabhängig von den Messdaten des Radarsensors berechnen und so die Kalibrierung des Radarsensors überprüfen. Wenn sich dabei eine Diskrepanz zwischen den gemessenen und den berechneten Azimutwinkeln ergibt, meldet der Kalibrierungsdienst diese Diskrepanzen an das Umfelderfassungssystem 14 zurück. Anhand dieser Information kann das Umfelderfassungssystem 14 im Zuge einer Neukalibrierung das Antennendiagramm des Radarsensors auf den gesamten Winkelbereich korrigieren, den das Signaturobjekt 30 im Laufe der Kurvenfahrt überstreicht.

Auf analoge Weise kann der Kalibrierungsdienst 26 auch die Kalibrierung der übrigen Radarsensoren 18 überprüfen und gegebenenfalls korrigieren. Wesentlich dabei ist, dass sich die Kalibrierung auf die Ortungsdaten einer überschaubaren Anzahl von Signaturobjekten 30 stützt, während alle übrigen Ortungsdaten spätestens vom Kalibrierungsdienst 26 als Nicht-Signaturobjekte erkannt und verworfen werden. Auf diese Weise wird auch bei einer großen Anzahl von zu kalibrierenden Radarsensoren die zu verarbeitende Datenmenge in Grenzen gehalten.

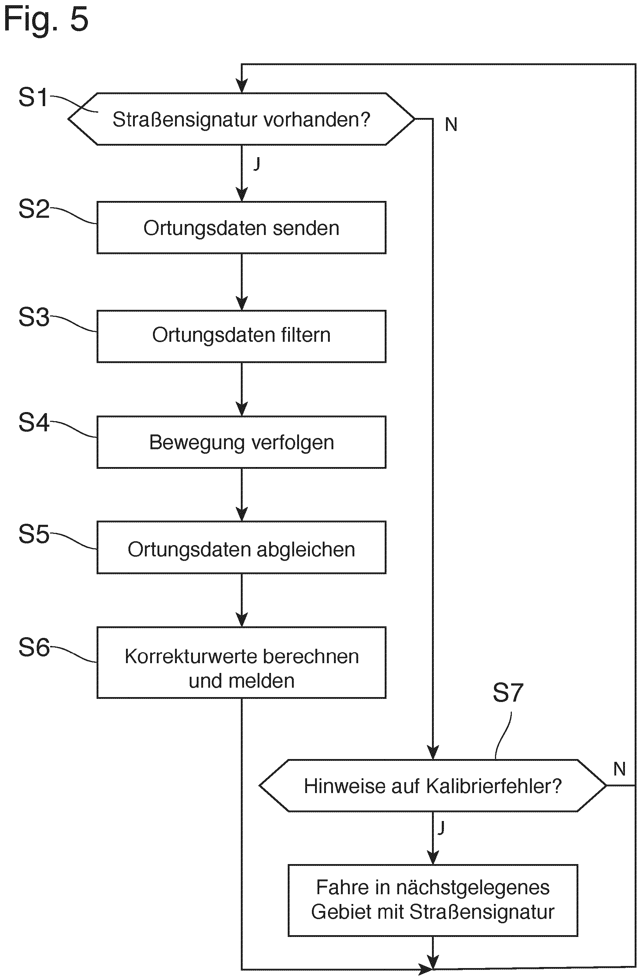

In Fig. 5 sind die wesentlichen Schritte eines Verfahrens gemäß der Erfindung in einem Flussdiagramm dargestellt.

In Schritt S1 wird vom Umfelderfassungssystem 14 beispielsweise anhand eines GPS-Signals geprüft, ob für die von dem Fahrzeug befahrene Straße eine Straßensignatur vorhanden ist. Wenn dies der Fall ist (J), beginnt das Umfelderfassungssystem in Schritt S2 damit, die Ortungsdaten der Radarsensoren 16, 18 zu senden. Durch den Kalibrierungsdienst 26 werden dann in Schritt S3 die Signaturobjekte aus den Ortungsdaten herausgefiltert. In einer anderen Ausführungsform werden nur die Ortungsdaten stationärer Ziele gesendet. Durch den Kalibrierungsdienst 26 werden dann nur stationäre Objekte ausgefiltert, die nicht als Signaturobjekte in der digitalen Karte verzeichnet sind.

Grundsätzlich ist es auch möglich, den Kalibrierungsdienst im Fahrzeug selbst zu implementieren und lediglich die Straßensignatur aus der Cloud herunterzuladen.

In Schritt S4 nutzt dann der Kalibrierungsdienst 26 die gesendeten Ortungsdaten und die Bewegungsdaten des Fahrzeugs dazu, die Bewegung des Fahrzeugs auf der digitalen Karte zu verfolgen. Das erlaubt es, zu jedem Zeitpunkt anhand der relativen Positionen der Signaturobjekte und des Fahrzeugs die zu erwartenden Ortungsdaten (Abstände Azimutwinkel und - bei bekannter Höhe gewisser Signaturobjekte - auch Elevationswinkel zu berechnen. In Schritt S5 werden dann die berechneten Daten mit den vom Umfelderfassungssystem 14 gesendeten Ortungsdaten abgeglichen. Sofern dabei signifikante Abweichungen auftreten, werden in Schritt S6 die nötigen Korrekturwerte berechnet und an das Umfelderfassungssystem 14 gemeldet, das daraufhin die Kalibrierung anpasst. Danach, oder wenn es keine signifikanten Abweichungen gibt, erfolgt ein Rücksprung zu Schritt S1, und die Schritte werden zyklisch wiederholt.

Wenn sich in Schritt S1 zeigt, dass für die befahrene Straße keine Straßensignatur vorhanden ist, verzweigt das Programm zu Schritt S7. Hier wird geprüft, beispielsweise anhand etwaiger Diskrepanzen zwischen den Messdaten verschiedener Radarsensoren oder zwischen Messdaten von Radarsensoren und Videokameras, ob es Hinweise auf Kalibrierungsfehler gibt. Wenn dies nicht der Fall ist (N) erfolgt ein Rücksprung zu Schritt S1. Andernfalls (J) wird an den Fahrer bzw. das autonome Fahrsystem die Anweisung ausgegeben, das nächstgelegene Gebiet anzufahren, für das eine Straßensignatur vorhanden ist, so dass dann bei einer nachfolgenden Ausführung des Schrittes S1 die Kalibrierungsprozedur eingeleitet werden kann.

## Patentansprüche

1. Verfahren zur Online-Kalibrierung eines Umfelderfassungssystems (14) in einem Kraftfahrzeug (10), **gekennzeichnet durch** die folgenden Schritte:
a) während der Fahrt des Fahrzeugs (10) erfasst das Umfelderfassungssystem (14) fortlaufend Ortungsdaten von Objekten (30, 32) in seinem Umfeld und sendet diese Ortungsdaten zusammen mit Bewegungsdaten des Fahrzeugs (10) drahtlos an einen Kalibrierungsdienst (26);
b) der Kalibrierungsdienst (26) hat Zugang zu einer Straßensignatur (28) in der Form einer digitalen Karte, in der längs der von dem Fahrzeug befahrenen Straße (12) die Positionen von permanent stationären Signaturobjekten (30) verzeichnet sind, die von Umfelderfassungssystemen erfassbar sind, und filtert die vom Umfelderfassungssystem (14) gesendeten Ortungsdaten nach Signaturobjekten;
c) anhand der Ortungsdaten der Signaturobjekte (30) und anhand der Bewegungsdaten verfolgt der Kalibrierungsdienst (26) die Bewegung des Fahrzeugs (10) auf der digitalen Karte;
d) durch Abgleich der Ortungsdaten der Signaturobjekte (30) mit den Positionen der Signaturobjekte relativ zum Fahrzeug (10) in der digitalen Karte berechnet der Kalibrierungsdienst (26) Korrekturdaten, die, soweit vorhanden, Kalibrierungsfehler des Umfelderfassungssystems (14) angeben, und sendet diese an das Fahrzeug (10);
e) das Umfelderfassungssystem (14) nimmt anhand der Korrekturdaten eine Neukalibrierung vor.

2. Verfahren nach Anspruch 1, bei dem zum Filtern der gesendeten Ortungsdaten ein Matched-Filter-Algorithmus eingesetzt wird.

3. Verfahren nach Anspruch 1 oder 2, bei dem zum Filtern der gesendeten Ortungsdaten künstliche Intelligenz eingesetzt wird.

4. Verfahren nach einem der vorstehenden Ansprüche, bei dem das Umfelderfassungssystem (14) zusammen mit den Ortungsdaten und den Bewegungsdaten auch die von einem GPS-System angegebene Position des Fahrzeugs (10) an den Kalibrierungsdienst (26) meldet.

5. Verfahren nach einem der vorstehenden Ansprüche, bei dem die Kalibrierung der Sensoren des Umfelderfassungssystems (14) geprüft wird, wann immer sich das Fahrzeug (10) in einem Gebiet befindet, für das eine Straßensignatur (28) vorliegt.

6. Verfahren nach einem der vorstehenden Ansprüche, bei dem, wenn es Anzeichen dafür gibt, das ein Kalibrierungsfehler vorliegen könnte, automatisch ein Fahrerhinweis oder, im Fall eines autonomen Fahrzeugs, ein Befehl ausgegeben wird, das nächstgelegene Gebiet anzufahren, für das eine Straßensignatur (28) vorliegt.

7. Verfahren nach einem der vorstehenden Ansprüche, bei dem die Kalibrierung während der Herstellung oder Prüfung des Kraftfahrzeugs erfolgt, unter Benutzung einer für die Fertigungsstraße oder Prüfstrecke erstellten Straßensignatur.

8. Einrichtung zur Online-Kalibrierung von Umfelderfassungssystemen von Kraftfahrzeugen, **gekennzeichnet durch** ein elektronisches Datenverarbeitungssystem, das dazu programmiert ist, einen Kalibrierungsdienst (26) für das Verfahren gemäß Anspruch 1 bereitzustellen.
